# EUROPEAN PATENT APPLICATION

(11) **EP 3 693 877 A1**
(43) Date of publication of application: **12.08.2020**
(21) Application number: 20155812.9
(22) Date of filing: 06.02.2020
(51) Int. Cl.: G06F 21/32, G06F 21/31, H04W 12/06, G07C 5/00, B60W 30/14

(54) **METHODS AND SYSTEMS TO LIMIT A VEHICLE FUNCTIONALITY DEPENDING ON DRIVER PROFILE**

(30) Priority: 06.02.2019 US 201962802088 P; 05.02.2020 US 202016782462
(71) Applicant: BlackBerry Limited, Waterloo, Ontario N2K 0A7 (CA)
(72) Inventor: ADAMS, Neil Patrick, Waterloo, Ontario N2K 0A7 (CA); MULAOSMANOVIC, Jasmin, Waterloo, Ontario N2K 0A7 (CA); LOMBARDI, Robert Joseph, Waterloo, Ontario N2K 0A7 (CA)
(74) Representative: Hanna Moore + Curley

(57) **Abstract**

Methods and systems to restrict vehicle operations based on driver identity. Owners or administrators may impose restrictions on certain users of a vehicle. Certain drivers may be classed as restricted users that have associated limitations or restrictions on their use of vehicle features. The vehicle determines the identity of the driver. Based on that identity and/or the class with which the identity is associated, some features may be disabled and some features may be subject to limitation, such as mileage, speed, or location restrictions. Ongoing monitoring of limited features may result in detection of a violation that triggers one or more security actions.

## Description

### CROSS-REFERENCE TO RELATED APPLICATIONS

The present application claims priority to US provisional application serial no. 62/802,088, filed February 6, 2019, entitled Safety Methods and Systems for Vehicles.

### FIELD

The present application generally relates to vehicles and, in particular, to systems and methods for improved safety or control in connection with vehicles.

### BACKGROUND

Vehicles provide a number of feature and functions. In many cases, a vehicle may be operated by a driver that is not the owner of the vehicle. For example, a parent may own a vehicle driven by a child. A renter may operate a vehicle owned by a car rental company. In some cases, more than one type of driver may be expected to use a vehicle.

### SUMMARY

Accordingly, there is provided a method, a vehicle and a computer program as detailed in the claims that follow.

### BRIEF DESCRIPTION OF THE DRAWINGS

Reference will now be made, by way of example, to the accompanying drawings which show example embodiments of the present application, and in which:
Figure 1 shows a high-level block diagram of an example computing device;
Figure 2 provides an architectural diagram showing virtual machines hosted by an example computing device;
Figure 3 illustrates, in block diagram form, a simplified vehicle; and
Figure 4 shows, in flowchart form, one example method of restricting vehicle operation based on driver identity.

Similar reference numerals may have been used in different figures to denote similar components.

### DESCRIPTION OF EXAMPLE EMBODIMENTS

In a first aspect, the present application describes a method of controlling a vehicle, the vehicle including a computing device to control vehicle functions. The method includes receiving identification data regarding a driver occupying the vehicle; identifying, based on the identification data, a restricted driver profile having a set of associated restrictions; enabling access to vehicle functions and features based on the associated restrictions; monitoring vehicle operation; and detecting violation of one of the associated restrictions and taking a security action.

In some implementations, the identification data may include one or more of voice data, facial image data, fingerprint scan data, password input, iris scan data, key fob data, mobile phone identification data, seat adjustment data, or driving habit data.

In some implementations, the vehicle may include a biometric sensor, and receiving identification data may include receiving biometric identification data via the biometric sensor, and identifying a restricted driver profile may include matching the received biometric identification data to a biometric profile stored in association with the restricted driver profile.

In some implementations, identifying a restricted driver profile may include comparing the identification data to stored individual driver profiles, determining that no match is found, and selecting an unidentified driver profile as the restricted driver profile.

In some implementations, the set of associated restrictions includes one or more permitted functions, and enabling access may include enabling the one or more permitted functions.

In some implementations, the set of associated restrictions includes one or more prohibited functions, and enabling access further may include disabling the one or more prohibited functions.

In some implementations, the set of associated restrictions includes one or more restricted functions, enabling access may include enabling access to the one or more restricted functions, and monitoring may include monitoring usage of the one or more restricted functions. In some cases, the one or more restricted functions may include vehicle speed, audio volume, passenger occupancy count, time of day of operation, vehicle location, road class, distance travelled, or road conditions.

In some implementations, the set of associated restrictions include one or more restrictions conditional upon contextual data, and the contextual data may include one or more of weather data, number of vehicle occupants, time of day, or ambient light levels.

In some implementations, taking a security action may include one or more of outputting a visual warning within the vehicle, outputting an audio warning within the vehicle, transmitting a wireless notification to a remote device, or disabling a vehicle feature.

In another aspect the present application discloses a vehicle that includes memory storing a restricted driver profile having a set of associated restrictions, a computing device, and a driver permissions application stored in memory and containing processor-executable instructions. When executed by the computing device, the instructions may cause the computing device to receive identification data regarding a driver occupying the vehicle, identify, based on the identification data, the restricted driver profile, enable access to vehicle functions and features based on the associated restrictions, monitor vehicle operation, and detect violation of one of the associated restrictions and take a security action.

In yet another aspect, the present application discloses a non-transitory computer-readable medium storing computer-executable instructions that, when executed by one or more processors, cause the one or more processors to carry out the operations of receiving identification data regarding a driver occupying the vehicle; identifying, based on the identification data, a restricted driver profile having a set of associated restrictions; enabling access to vehicle functions and features based on the associated restrictions; monitoring vehicle operation; and detecting violation of one of the associated restrictions and taking a security action.

Other aspects and features of the present application will be understood by those of ordinary skill in the art from a review of the following description of examples in conjunction with the accompanying figures.

In the present application, the terms "about", "approximately", and "substantially" are meant to cover variations that may exist in the upper and lower limits of the ranges of values, such as variations in properties, parameters, and dimensions. In a non-limiting example, the terms "about", "approximately", and "substantially" may mean plus or minus 10 percent or less.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of ... or..." is intended to cover any one or more of the listed elements, including any one of the listed elements alone, any sub-combination, or all of the elements, without necessarily excluding any additional elements, and without necessarily requiring all of the elements.

The present application relates to safety and control of vehicles. The term vehicle may be used interchangeably herein with "automobile", "car", and the like, and any such terms are not intended to be limited in scope to passenger automobiles, road vehicles, or any particular body types or styles. Among passenger automobiles, the terms are intended to include sedans, sport utility vehicles, cross-overs, vans, trucks, compacts, and all other vehicle classes. The terms further include other road automobiles including buses, transport trucks, motorcycles, *etc.* In examples described herein, vehicles may include motor vehicles (e.g., automobiles, cars, trucks, buses, motorcycles, *etc.*), aircraft (e.g., airplanes, helicopters, manned aerial vehicles, *etc.*), spacecraft (e.g., spaceplanes, space shuttles, space capsules, space stations, *etc.*), watercraft (e.g., ships, boats, hovercrafts, submarines, *etc.*), railed vehicles (e.g., trains, light rail vehicles, trams, *etc.*), or other types of vehicles including any combinations of the foregoing.

As noted above, vehicle sharing, whether with family members, friends, coworkers, employees, or renters, introduces safety and control concerns for the vehicle owner. The people with whom a vehicle is shared may be relatively new drivers/operators, or may be under regulatory restrictions by virtue of their class of vehicle driver's license. An example is a vehicle owned by a parent and operated by a newly-licensed child driver. The parent may wish to ensure the vehicle is operated in a manner that ensures safety and control. Another example arises in the case of car rentals or company cars. In those cases, the corporate owner of the vehicle may wish to impose certain restrictions on the safe operation of the vehicle.

In accordance with one aspect of the present application, a computing system within a vehicle is configured to identify a driver. Based on that identification, in some cases, a driver class may be identified. Different drivers (or different driver classes) may correspond to different permissions or restrictions in terms of the vehicle functionality. For example, an owner or administrator driver may have full use of all vehicle functionality without restrictions. A restricted driver may be associated with a more restricted set of permissions or certain limitations on functionality. Restrictions may be specific to a driver profile or may be associated with a driver based on a class of driver assigned to the profile. Examples are provided below. The vehicle computing systems, through various input devices or sensors, may monitor activity of the vehicle, including, for example, mileage, location, speed, or other indicia of driving context. Comparison of the driving context with restrictions associated with the driver or driver class may result in detection of a violation of a restriction, which may then result in a security action. Security actions may include recording the violation in memory locally or remotely, reporting the violation to the vehicle owner or another entity, issuing an alert or warning to the driver through an user interface, disabling some function of the vehicle, preventing access to one or more features of the vehicle, or various combinations or sub-combinations thereof.

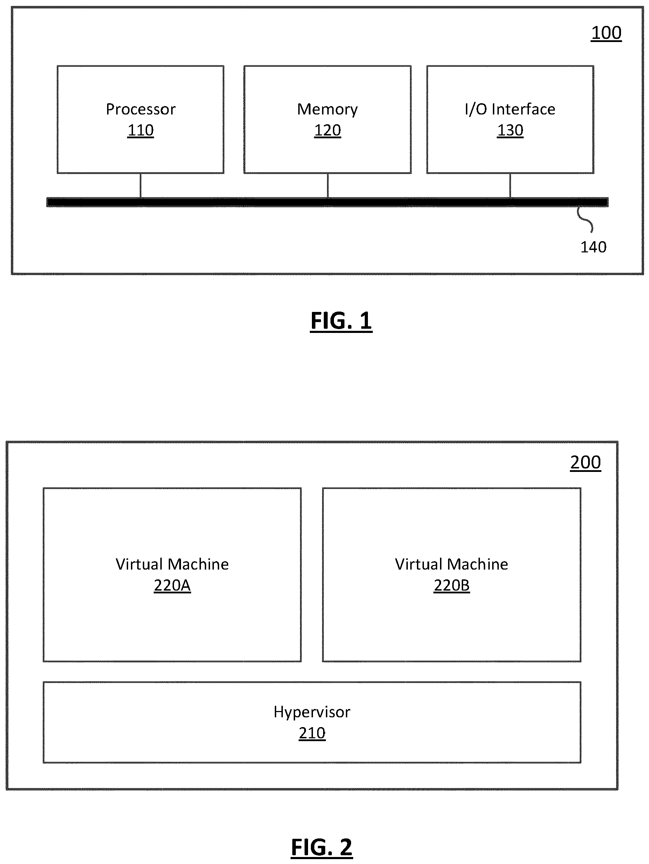

Reference is first made to FIG. 1, which shows a high-level block diagram of an example computing device 100. The computing device 100 is within a vehicle, and it includes a processor 110, a memory 120, and an I/O interface 130. These modules of the example computing device 100 are in communication over a bus 140. As further described below, the example computing device 100 may host virtual machines.

The processor 110 includes a hardware processor and may, for example, include one or more processors using ARM, x86, MIPS, or PowerPC (TM) instruction sets. For example, the processor 110 may include Intel (TM) Core (TM) processors, Qualcomm (TM) Snapdragon (TM) processors, or the like. It may be that the processor 110 provides hardware support for virtualization. For example, the processor 110 may include one or more instructions and/or architectural features such as may be utilized by a hypervisor to control virtualization for hosting the virtual machines.

The memory 120 includes at least one physical memory. The memory 120 may include random access memory, read-only memory, persistent storage such as, for example, flash memory, a solid-state drive or the like. Read-only memory and persistent storage are a computer-readable medium and, more particularly, may each be considered a non-transitory computer-readable storage medium. A computer-readable medium may be organized using a file system such as may be administered by software governing overall operation of the example computing device 100.

The I/O interface 130 is an input/output interface. The I/O interface 130 allows the example computing device 100 to receive input and provide output. For example, the I/O interface 130 may allow the example computing device 100 to receive input from or provide output to a user. In another example, the I/O interface 130 may allow the example computing device 100 to communicate with a computer network. The I/O interface 130 may serve to interconnect the example computing device 100 with one or more I/O devices such as, for example, a keyboard, a display screen, a touchscreen, a pointing device like a mouse or a trackball, a fingerprint reader, a communications module or the like. Virtual counterparts of the I/O interface 130 and/or devices accessed via the I/O interface 130 may be provided such as, for example, by the hypervisor, to some or all of the virtual machines as may be hosted by the example computing device 100 under supervision of the hypervisor.

Software instructions are executed by the processor 110 from a computer-readable medium. For example, software corresponding to a hypervisor and/or software corresponding to software being executed by a virtual machine may be loaded into random-access memory from persistent storage or flash memory of the memory 120. Additionally or alternatively, software may be executed by the processor 110 directly from read-only memory of the memory 120. In another example, software may be accessed via the I/O interface 130.

FIG. 2 provides an architectural diagram 200 showing virtual machines such as may be hosted by the example computing device 100.

As illustrated, a hypervisor 210 may supervise a group of virtual machines such as may be hosted by the example computing device 100. For example, as shown, the hypervisor 210 may supervise a first virtual machine 220A and a second virtual machine 220B. The hypervisor and/or other software executing on the example computing device 100 may be considered the host of the first virtual machine 220A and the second virtual machine 220B.

In some implementations, the hypervisor 210 may include a type 1 hypervisor running directly on the hardware of the example computing device 100. In a particular example, the hypervisor 210 may include the QNX (TM) Hypervisor. In other implementations, the hypervisor 210 may be a type 2 hypervisor running on some host operating system (not shown) that is in turn executing on the example computing device 100 and provides virtualization services.

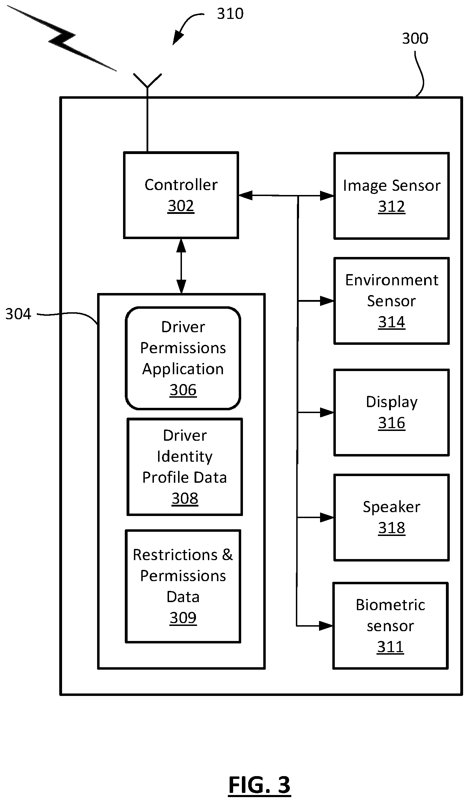

Reference is made to FIG. 3, which illustrates, in block diagram form, a simplified vehicle 300, in accordance with an example of the present application. The vehicle 300 includes a computing system, which in this example includes a controller 302. The controller 302 may include one or more processors, memory, executable program instructions, and various input, output, and communication subsystems. In some examples, the controller 302 may be configured as a hypervisor and one or more virtual machines, as described above in connection with FIG. 2.

The vehicle 300 may include one or more wireless antennas 310 to enable wireless communication with remote computing devices, including through cellular data communications, wireless local area networks, dedicated short-range communications (DSRC), or any other wireless communications protocol. The controller may be implemented by, or a part of, the vehicle electronic computer system that control various aspects of the vehicle operations and a plurality of sensors that gather vehicle data.

The vehicle 300 may include one or more image sensors 312 positioned on the vehicle for capturing one or more images within or outside of the vehicle. For example, an image sensor 312 may be an image capture device that is positioned to image the external environment for the purposes of assessing external weather or road conditions. In some examples, the image sensor 312 may be an in-vehicle image sensor for capturing image data of the vehicle interior. In some such examples, the image sensor 312 may be positioned to capture an image of the driver, such as to facilitate facial recognition of the driver. The same or other image sensors 312 may be positioned to capture images of one or more passengers, for example to determine vehicle occupancy status.

The vehicle 300 may include one or more biometric sensors 311. The biometric sensors 311 may include any sensor capable of receiving biometric input through which an identification of the user may be made. Examples may include a fingerprint sensor, a retinal scanner, a microphone for voice print recognition, and the like.

The vehicle 300 may further include one or more environment sensors 314. An environment sensor 314 may detect environment conditions, such as for determining road conditions.

The vehicle 300 may further include at least one display 316 and at least one speaker 318 for outputting visual or auditory information. The display may include a dashboard LCD or LED screen and/or icons that may be selectively illuminated in the dashboard. The display 316 may be a touchscreen display capable of receiving user input in some implementations. In some vehicles the touchscreen display provides a graphical user interface to the vehicle "infotainment" system that provides vehicle operating information and entertainment functionality, including for example operating parameters (speed, mileage, etc.), navigation and maps, music, video, games, *etc.* The "infotainment" system is provided by the controller 302 by way of applications specific to particular features or functions of the system.

The vehicle 300 computing system further includes at least one memory 304 coupled to the controller 302 and storing processor-executable instructions that, when executed, cause one or more processors to carry out some of the operations described herein. The processor-executable instructions may be in the form of modules, applications, or other computer programs, and may be standalone programs or incorporated into larger programs relating to vehicles.

As an example, the vehicle 300 may include a driver permissions application 306 and driver identity profile data 308. The driver permissions application 306 may obtain information identifying the driver and, based on the driver identity and the driver identity profile data 308, may impose restrictions on vehicle operations or features. In this regard, the memory 304 may further store restrictions and permissions data 309. In some instances, the driver identity profile data 308 may incorporate the restrictions and permissions data 309. The restrictions and permissions data 309 may be specific to each driver for which a profile exists, or may be specific to a class and each driver profile may have an associated class. In some cases, an "unidentified driver" profile may be a default class for use when unable to identify a driver and/or class.

The identification of the driver may be based on biometric input data, in some examples. This may include voice data, fingerprint data, iris scan data, facial image data, weight data (via a seat sensor), or other such data, whether in combination or sub-combination. In some implementations, the identification of the driver may be based, at least partly, on non-biometric data, such as an input password, passphrase, or other authentication mechanisms. In yet other implementations, the identification of the driver may be at least partly based on non-biometric inference data. The full range of possible mechanisms for identifying a driver will be appreciated by those ordinarily skilled in the art in light of the description herein.

In this example, the driver identity profile data 308 may include biometric data associated with a driver identity. The driver permissions application 306 may obtain biometric input data from a driver/operator of the vehicle and may compare that biometric input data to the stored biometric data to locate a match. If a match is found, then the driver has been identified. If a match has not been found, then the driver permissions application 306 has failed to identify the driver. In such a case, the driver permissions application 306 may be configured to prevent operation of the vehicle, or may be configured to impose restrictions associated with an "unidentified driver" class.

In some example implementations, identification of the driver may be based on data other than biometric data. For example, in one implementation, the identity of the driver may be associated with a specific key fob and presence of that key fob may result in identification of the associated driver. In some example implementations, driver identity may be inferred based on driving habits. In some example implementations, driver identity may be inferred based on seat adjustments made. In some example implementations, driver identity may be based on a mobile phone pairing with the infotainment system and a stored association between the driver identity and the mobile phone. In some implementations, more than one of these factors is included in the determination of driver identity and the factors may include both biometric and non-biometric data.

It can be appreciated that the vehicle 300 may include other electrical, mechanical, or electro-mechanical components or systems that directly control elements of the vehicle 300. Further, these other electrical, mechanical, or electro-mechanical components may also operate in response to commands or messages from the controller 302.

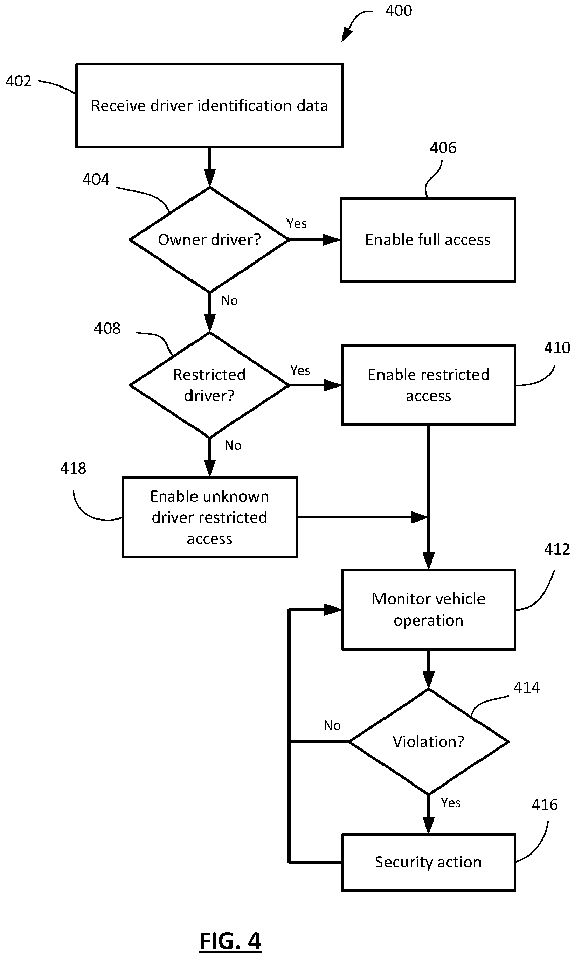

Reference is now made to FIG. 4, which shows, in flowchart form, one example method 400 of restricting vehicle operation based on driver identity. The method 400 includes, in operation 402, receiving, by the computing system, identification data for the driver. The range of types of identification data is described above. In this example, it may be assumed that the identification data is biometric input data, but other types of data may be used in other implementations.

In operation 404, the computing system of the vehicle assesses whether the received identification data matches a profile. The profile may be stored in memory locally. In some cases, the profile may be stored remotely. In either case, in operation 404 the system assesses whether a matched profile, if any, corresponds to an "owner" profile or an "administrator" profile. If so, then in operation 406, full access is enabled to all vehicle features. This may include permitting the owner or administrator to edit, delete, or otherwise change driver profiles, restrictions, or classes with which the profiles are associated through a user interface in the vehicle, such as the touchscreen. The owner or administrator may also be permitted to add new profiles to authorize new drivers. In some cases, the profile adding, editing, and deleting functions may be utilized by an owner through a web interface via a network connected PC or other computing device, through an app via a mobile device, or through some other user interface in a non-vehicular computing device. When full access is enabled in operation 406, the owner has full access to the features and capabilities of the vehicle and no ongoing monitoring of vehicle activity is required for the purposes of detecting violations.

In operation 408, the computing system determines whether the identification data matches a restricted driver profile. That is, the system assesses whether a matched driver profile has restrictions or limited permissions with which it is associated. In some cases, the association may be made through the driver profile being designated as belonging to a certain class, such as "student driver", "renter", "underage driver", "elderly driver", or other such classes of restricted driver. If a restricted driver is recognized through identification of a matching driver profile, then in operation 410 restricted access to vehicle functions and features is enabled. The restrictions may include disabling of certain vehicle functions and/or the imposition of certain limitations on vehicle function, examples of which are described below. For those features that are subject to limitation (e.g. limit on mileage, speed, geographic location, or distance that can be traveled from a given point), the system employs ongoing monitoring in operation 412. If a violation of the limitation is detected in operation 414, then a security action may be taken in operation 416. More than one security action may be taken, and security actions may escalate as a violation continues. Examples are provided below.

If, in operation 408, the system is unable to identify the driver as an owner, administrator, or a restricted driver, then it may determine that the driver is an "unknown driver". The "unknown driver" classification may have an associated set of restrictions and permissions, which are imposed in operation 418. As with restricted driver, the system monitors the limitations of the unknown driver for violations and takes appropriate security actions if violations are detected. The "unknown driver" class may be termed a "valet class" in some implementations. The restrictions and permission may prevent the unknown driver from accessing or operating the infotainment system, may severely restrict mileage or distance from an initial point, may prevent access to a glove compartment and/or trunk, the use of windows or sunroof, or other features or functions. In one case, the restriction prevents use of the vehicle altogether, and/or prevents use until an owner is notified by communication message and an authorization message is returned.

It will be appreciated that the above-described method 400 and its operations may be reorganized such that certain operations are carried out at the same time, or in a different order, without materially affecting operation of the method 400. Various additional operations may occur in the method 400, and certain changes to the operations described may be implemented while achieving the same overall operation of driver-identity-based vehicle operation restrictions.

In one example, instead of detailing restrictions, the driver profile data may specify permissions, with the default state being no enabled features. In such an embodiment, the owner/administrator profile may have specify an extensive set of permissions to enable a full range of features, whereas restricted driver profiles may provide fewer or more restricted permissions.

Non-limiting example restrictions may include restricting performance aspects of the vehicle. For example, the speed may be limited. Speed limitations may also be based on ongoing location detection, such that the imposed speed restriction reflects the speed limit, or some relationship (e.g. 90%, 100%, 110%) to the speed limit, on a specific roadway in which the vehicle is located. In some cases, the performance restrictions may include restrictions on acceleration or torque.

Another example restriction is the disablement of certain functions. For example, with student or new drivers, it may be desirable to disable potentially distracting features, such as aspects of the infotainment system, like video, music, gaming, etc. or to disable features that may be abused, like a sunroof. In some cases, restrictions are imposed, such as a volume restriction on the audio system.

A further example restriction may be based on the number of passengers, or may require the use of seatbelts for every passenger. The number of passengers permitted may be restricted to a maximum number. Any one or more of a number of mechanisms may be used to determine the number of passengers, including seat weight sensors, in-car imaging and image recognition, or other sensors capable of identifying the number of occupants.

Yet a further example restriction is based on mileage or location. For example, the restriction may limit a restricted driver to no more than a maximum distance travelled. The driver may received, as a security action, one or a series of escalating warnings via audio or display as the threshold maximum is approached. If the maximum travel distance is exceeded, in some implementations notification may be sent to an owner or administrator, the driver may be warned that the vehicle may be disabled, and/or action may be taken to further restrict speed or to disable operation of some or all of the vehicle.

Location may be monitored and security action taken if the drive takes the vehicle more than a threshold distance from a defined location, such as a home location, for example. Location may also be monitored if a restriction is imposed on types of roadways that the driver is permitted to use. For example, the restricted driver may not be permitted to use toll highways, or may not be permitted to use certain classes of large highways or expressways. Through location monitoring, the restricted driver may be warned if approaching a highway or roadway for which they lack permission. Entering such a roadway may result in heightened warning and guidance for exiting the roadway at the next opportunity. Notifications may be sent to the owner or administrator for any violations.

Road condition data, whether from on-vehicle sensors or relayed wirelessly to the vehicle from third-party sources, may be factored into the setting of limitation or restrictions for a restricted user. For example, snow or rain conditions may result in more restrictive limitations than otherwise imposed on a restricted user. In some cases, the restricted user may be prevented from operating or continuing to operate a vehicle if the conditions are deemed sufficiently dangerous.

Adjustments or changes to particularly restrictions or limitation may be based on other contextual data. For example, the number of vehicle occupants may be used to adjust restrictions. As an illustration, a restricted driver may be prevented from using the infotainment system based on the number of occupants in the vehicle. As another example, some restrictions may be dependent on time of day or ambient light levels. As an illustration, a restricted drive may have more onerous distance or location restrictions at night than during the day.

Any combination or sub-combination of the above-described limitations and monitoring activity may be employed in specific implementations.

Example security actions may include sending a notification to the owner(s), an administrator, or a third party, displaying a warning or a violation message, outputting audio regarding a warning or a violation, providing a guided navigation to prevent or mitigate a violation, particularly as regards location, disabling of one or more features, imposition of further restrictions on operation, or preventing further operation of the vehicle. In some cases, a security action may include capture audio or video from within or outside the vehicle. The captured audio or video may be stored locally, transmitted remotely, or even streamed live to the owner, an administrator, or a third party. Combinations and escalations of security actions may be suitable for some implementations.

Example embodiments of the present application are not limited to any particular operating system, system architecture, mobile device architecture, server architecture, or computer programming language.

It will be understood that the applications, modules, routines, processes, threads, or other software components implementing the described method/process may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A method of controlling a vehicle, the vehicle including a computing device to control vehicle functions, the method comprising:
receiving identification data regarding a driver occupying the vehicle;
identifying, based on the identification data, a restricted driver profile having a set of associated restrictions;
enabling access to vehicle functions and features based on the associated restrictions;
monitoring vehicle operation; and
detecting violation of one of the associated restrictions and taking a security action.

2. The method claimed in claim 1, wherein the identification data includes one or more of voice data, facial image data, fingerprint scan data, password input, iris scan data, key fob data, mobile phone identification data, seat adjustment data, or driving habit data.

3. The method claimed in claim 1 or 2, wherein the vehicle includes a biometric sensor, and wherein receiving identification data includes receiving biometric identification data via the biometric sensor, and wherein identifying a restricted driver profile includes matching the received biometric identification data to a biometric profile stored in association with the restricted driver profile.

4. The method claimed in any preceding claim, wherein identifying a restricted driver profile includes comparing the identification data to stored individual driver profiles, determining that no match is found, and selecting an unidentified driver profile as the restricted driver profile.

5. The method claimed in any preceding claim, wherein the set of associated restrictions includes one or more permitted functions, and wherein enabling access includes enabling the one or more permitted functions.

6. The method claimed in any preceding claim, wherein the set of associated restrictions includes one or more prohibited functions, and wherein enabling access further includes disabling the one or more prohibited functions.

7. The method claimed in any preceding claim, wherein the set of associated restrictions includes one or more restricted functions, wherein enabling access includes enabling access to the one or more restricted functions, and wherein monitoring includes monitoring usage of the one or more restricted functions.

8. The method claimed in claim 7, wherein the one or more restricted functions includes at least one of vehicle speed, audio volume, passenger occupancy count, time of day of operation, vehicle location, road class, distance travelled, or road conditions.

9. The method claimed in any preceding claim, wherein the set of associated restrictions include one or more restrictions conditional upon contextual data, and wherein the contextual data includes one or more of weather data, number of vehicle occupants, time of day, or ambient light levels.

10. The method claimed in any preceding claim, wherein taking a security action includes one or more of outputting a visual warning within the vehicle, outputting an audio warning within the vehicle, transmitting a wireless notification to a remote device, or disabling a vehicle feature.

11. A vehicle, comprising:
memory storing a restricted driver profile having a set of associated restrictions;
a computing device; and
a driver permissions application stored in memory and containing processor-executable instructions that, when executed by the computing device, cause the computing device to carry out the method of any preceding claim.

12. A computer program that, when executed by one or more processors, causes the one or more processors to carry out the method of any one of claims 1 to 10.
